# EUROPÄISCHE PATENTANMELDUNG

(11) **EP 4 484 338 A1**
(43) Veröffentlichungstag der Anmeldung: **01.01.2025**
(21) Anmeldenummer: 24178125.1
(22) Anmeldetag: 27.05.2024
(51) Int. Cl.: B65G 43/02, G01N 27/02

(54) **SENSOR ZUR ERKENNUNG VON BESCHÄDIGUNGEN IN EINEM RIEMEN**

(30) Priorität: 26.06.2023 DE 102023205990
(71) Anmelder: ContiTech Deutschland GmbH, 30175 Hannover (DE)
(72) Erfinder: Dr. Kneer, Janosch, 30419 Hannover (DE); Kegel, Isabell, 30419 Hannover (DE); Schleuniger, Juerg, 30419 Hannover (DE); Dr. Minkin, Andrey, 30175 Hannover (DE); Bäuerle-Müller, Christel, 30175 Hannover (DE); Podias, Stavros, 30175 Hannover (DE); Dr. Seibold, Sebastian, 30175 Hannover (DE)
(74) Vertreter: Continental Corporation

(57) **Zusammenfassung**

Die Erfindung betrifft einen Sensor (10) zur Erkennung von Beschädigungen, insbesondere von Rissen, in einem Riemen (1), mit einer ersten und einer zweiten Leiterschleifenanordnung (20, 30), die sich jeweils parallel zu einer Sensorebene (E) erstrecken und in einer orthogonal zur Sensorebene (E) verlaufenden Höhenrichtung (H) beabstandet sind.

## Beschreibung

Die vorliegende Erfindung betrifft einen Sensor zur Erkennung von Beschädigungen in einem Riemen mit den Merkmalen des Anspruchs 1. Als Riemen werden sowohl Fördergurte als auch Antriebsriemen verstanden. Als Beschädigungen kommen z.B. in Förderrichtung verlaufende Gurtschlitze, große Durchbruchschäden in einem Fördergurt und Risse in einem Aufzug- oder Antriebsriemen in Betracht.

Genauer betrifft die Erfindung einen Sensor mit einer geschlossenen Leiterschleife, der an einem Riemen, wie beispielsweise einem Antriebsriemen oder einem Fördergurt, befestigt oder darin eingebettet werden kann.

Auf verschiedenen technischen Gebieten werden Riemen z.B. als Antriebsriemen zur Übertragung von Zugkräften und/oder als Fördergurt zum Transport von Fördergut eingesetzt. Antriebsriemen werden in vielen Anwendungsbereichen zum Antreiben und Übertragen von Kräften in Maschinen, Transportmitteln, Fahrzeugen, etc. eingesetzt, sowohl als umlaufende Antriebsriemen in einem Zugriementrieb bzw. Riemengetriebe als auch als Antriebsriemen endlicher Länge in einem Linearantrieb oder in einer Aufzugsanlage. Fördergurte werden zum Transport von Stückgütern und Schüttgütern verwenden.

Die z.B. im Mining-Bereich auf Fördergurte wirkenden mechanischen Belastungen seitens des aufgegebenen grobkörnigen Materials oder eines (eingeklemmten) Fremdkörpers (Metallstange, Eisenblech etc.) können zu einem Längsschlitz bzw. Durchbruchschäden und somit zu erheblichen Betriebsstörungen oder sogar in einer unglücklichen Situation zu einer kompletten Zerstörung eines Fördergurtes führen, wenn sie nicht rechtzeitig erkannt werden. Um einen mechanisch- oder verschleißbedingten Ausfall eines Riemens zu vermeiden, ist es vorteilhaft, Längsschlitze, starke mechanische Durchbruchschäden in einem Fördergurt oder Verschleißerscheinungen oder Risse am Aufzug- oder Antriebsriemen frühzeitig zu erkennen. Auf diese Weise kann ein defekter Riemen rechtzeitig repariert oder ausgetauscht werden.

Es ist bekannt, Riemen mit Leiterschleifen auszurüsten, um bei laufendem Riemen das Auftreten von Beschädigungen, wie beispielsweise Längs- oder Querschlitzen in Fördergurten oder Rissen Aufzug- oder Antriebsriemen, zu erkennen. Diese Leiterschleifen werden mit Hilfe einer auf den Sensor gerichteten Sender- /Empfänger-Kombination auf Unversehrtheit überprüft, indem durch den Sender ein elektrisches und/oder magnetisches Feld in der zumindest einen Leiterschleife des Sensors induziert und durch den Empfänger als Antwortsignal detektiert wird. Tritt eine Beschädigung im Bereich der geschlossenen Leiterschleife auf, führt dies in der Regel zur Unterbrechung der Leiterschleife und einer deutlichen Veränderung oder Ausfall des durch den Empfänger detektierbaren Antwortsignals. Wird eine Beschädigung des Riemens erkannt, kann der Riemen beispielsweise automatisch angehalten und gewartet werden. Beispiele für solche Überwachungssysteme sind in der EP 1 419 982 A2 und in der DE 10 2011 051 923 A1 offenbart.

Um eine prozesssichere Überwachung der vorbeschriebenen Art zu gewährleisten, muss eine ausreichende Qualität des Antwortsignals sichergestellt sein.

Aufgabe der vorliegenden Erfindung ist es, einen Sensor der eingangs genannten Art bereitzustellen, mit dem ein verbessertes Antwortsignal detektiert werden kann. Insbesondere soll der Sensor möglichst wenig Bauraum einnehmen. Vorzugsweise soll der Sensor mit den bisher bekannten Empfängergeometrien kompatibel sein.

Diese Aufgabe wird durch einen Sensor mit den Merkmalen des Anspruchs 1 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen. Gegenstand der vorliegenden Erfindung ist auch ein Riemen mit einem solchen Sensor und ein System zur Überwachung von Riemen, das einen solchen Riemen enthält.

Der erfindungsgemäße Sensor zur Erkennung von Beschädigungen in einem Riemen enthält eine erste und eine zweite Leiterschleifenanordnung, die sich jeweils parallel zu einer Sensorebene erstrecken. Die erste und die zweite Leiterschleifenanordnung weisen jeweils zumindest eine geschlossene Leiterschleife auf, wobei die zweite Leiterschleifenanordnung von der ersten Leiterschleifenanordnung in einer orthogonal zur Sensorebene verlaufenden Höhenrichtung beabstandet ist.

Der Erfindung liegt die Idee zugrunde, durch Stapeln der Leiterschleifen übereinander mehrere Leiterschleifen innerhalb eines bestimmten Flächenabschnitts zu platzieren, und auf diese Weise das Antwortsignal zu verbessern. Da Leiterschleifen weitaus weniger hoch als breit oder lang sind, führt das Stapeln nicht zu einem wesentlich höheren Bedarf an Bauraum. In Laborversuchen hat sich bestätigt, dass sich auf diese Weise die Stärke des Antwortsignals erhöhen lässt.

Insbesondere sind die Leiterschleifen der Leiterschleifenanordnungen gedruckt. Auf diese Weise kann eine besonders flache und kompakte Ausgestaltung und Stapelung des Sensors mit einer hohen Empfindlichkeit realisiert werden. Vorzugsweise weisen die Leiterschleifenanordnungen im Wesentlichen die gleiche Form - insbesondere Höhe, Breite und Länge - auf, was die Herstellung erleichtert. Bevorzugt sind die Leiterschleifenanordnungen jeweils bezüglich einer ersten, parallel zur Sensorebene verlaufenden Symmetrieachse und besonders bevorzugt auch bezüglich einer zweiten, parallel zur Sensorebene und orthogonal zur ersten Symmetrieachse verlaufenden zweiten Symmetrieachse spiegelsymmetrisch ausgebildet.

Für die Leiterschleifen der Leiterschleifenanordnungen kommen grundsätzlich verschiedene anorganische Materialien (wie z.B. Metalle) und organische Materialien (wie z.B. leitfähige Polymere, Carbon, Graphit, Graphen etc.) sowie Kombinationen davon in Betracht, sofern sie als Gesamtgefüge elektrisch leitfähig sind. Bevorzugt werden solche Materialien verwendet, die sich (z.B. als Tinte oder Paste) mittels Druckverfahren verarbeiten lassen. Vorzugsweise beträgt die orthogonal zur Sensorebene gemessene Höhe der Leiterschleifen 100 nm bis 50 µm. Auf diese Weise kann eine besonders kompakte Ausgestaltung des Sensors realisiert werden. Besonders bevorzugt beträgt die Höhe der Leiterschleifen 500 nm bis 15 µm, so dass diese mittels bewährter Druckverfahren prozesssicher hergestellt werden kann.

In einer bevorzugten Ausgestaltung des erfindungsgemäßen Sensors weisen die erste und/oder die zweite Leiterschleifenanordnung eine geschlossene innere Leiterschleife und eine diese umgebende, geschlossene äußere Leiterschleife auf. Durch diese konstruktive Ausgestaltung wird die Qualität des Antwortsignals weiter begünstigt. Grundsätzlich ist die Anzahl der Leiterschleifen nicht begrenzt, solange sie konzentrisch angeordnet sind und ihre Dimensionen, z.B. Leiterbahnbreite und -höhe, eine konzentrische, nicht überlappende Anordnung erlauben. Vorzugsweise umfasst jede Leiterschleifenanordnung bis zu fünf insbesondere konzentrisch angeordnete Leiterschleifen.

In einer weiteren bevorzugten Ausgestaltung des erfindungsgemäßen Sensors ist zwischen der ersten und der zweiten Leiterschleifenanordnung eine dielektrische Trägerschicht angeordnet. Die Trägerschicht beabstandet die Leiterschleifenanordnungen voneinander. Bevorzugt sind die Leiterschleifenanordnungen an der Trägerschicht befestigt und auf diese Weise in einer vorbestimmten Relativposition zueinander fixiert.

Für die Trägerschicht kommen grundsätzlich verschiedene Materialien in Betracht, sofern sie nicht leitfähig (d.h. dielektrisch) sind. Vorzugsweise enthält das Material der Trägerschicht zumindest ein Polymer, insbesondere einen Thermoplasten wie PET, PP, PI, PC, PU und/oder ein thermoplastisches Elastomer wie TPV oder TPU. Die Trägerschicht kann eine Folie sein. Eine Trägerschicht kann ferner besonders dünn und mittels Druckverfahren besonders effizient und prozesssicher realisiert werden. Vorzugsweise beträgt die Schichtdicke der Trägerschicht 100 nm bis 800 µm, bevorzugt 1 µm bis 100 µm, besonders bevorzugt 3 µm bis 50 µm.

In einer weiteren bevorzugten Ausgestaltung des erfindungsgemäßen Sensors sind die Leiterschleifenanordnungen in zumindest einer parallel zur Sensorebene verlaufenden Versatzrichtung zueinander versetzt angeordnet sind. Auf diese Weise ist es möglich, das Antwortsignal noch weiter zu verstärken. Bevorzugt sind die Leiterschleifenanordnungen in genau einer Versatzrichtung zueinander versetzt angeordnet, was den für den Sensor benötigten Bauraum minimiert. Ferner muss aufgrund der Kompaktheit des Sensors ein Sender und/oder Empfänger, der mit dem Sensor zusammenwirken soll, nicht größer dimensioniert werden, wodurch der Sensor mit bestehenden Überwachungssystemen kompatibel ist und kostengünstig nachgerüstet werden kann. Vorzugsweise ist die Versatzrichtung orthogonal zur Längs- bzw. Laufrichtung des Riemens ausgerichtet.

Hervorragende Ergebnisse ließen sich erzielen, wenn sich die von den Leiterschleifenanordnungen eingeschlossenen Flächen aus einer Perspektive orthogonal zur Sensorebene zu mehr als 50 %, besonders bevorzugt zu mehr als 70 %, und kleiner gleich 95 %, bevorzugt kleiner gleich 90 %, überdecken. Als die von einer Leiterschleifenanordnung eingeschlossene Fläche wird insbesondere jene Fläche betrachtet, die von der äußersten Leiterschleife der Leiterschleifenanordnung umschlossen wird.

In einer weiteren bevorzugten Ausgestaltung des erfindungsgemäßen Sensors weisen die Leiterschleifenanordnungen paarweise parallel zueinander verlaufende Leiterabschnitte auf, die sich parallel zur Versatzrichtung erstrecken. Auf diese Weise sind diese Leiterabschnitte auch bei einem vorbeschriebenen Versatz der Leiterschleifenanordnungen zu einem gewissen Teil übereinander angeordnet, was sich positiv auf das Antwortsignal auswirkt.

In einer weiteren bevorzugten Ausgestaltung des erfindungsgemäßen Sensors sind die erste und/oder die zweite Leiterschleifenanordnung durch eine Schutzschicht zum Schutz vor äußeren Einflüssen geschützt. Bevorzugt ist der Sensor in der folgenden Reihenfolge aufgebaut:
- Schutzschicht für die erste Leiterschleifenanordnung;
- erste Leiterschleifenanordnung;
- Trägerschicht;
- zweite Leiterschleifenanordnung und
- Schutzschicht für die zweite Leiterschleifenanordnung.

Zusätzliche Schichten können verwendet werden, um die Haftung zwischen den äußeren Schutzschichten und der inneren Trägerschicht zu fördern. Haftförderschichten können beispielsweise typische Klebematerialien wie Epoxidsysteme oder Schmelzklebstoffe oder PSA-Folien oder thermisch vernetzende oder UV-vernetzbare Systeme (z. B. dielektrischen Lacke) enthalten.

Für die Schutzschicht(en) kommen grundsätzlich verschiedene Materialien in Betracht, sofern sie nicht leitfähig und ausreichend undurchlässig für z.B. Sauerstoff und/oder Feuchtigkeit sind. Vorzugsweise enthält das Material der Schutzschicht(en) zumindest ein Polymer, insbesondere einen Thermoplasten wie PET, PP, PI, PC und/oder ein thermoplastisches Elastomer wie TPV oder TPU. Die Schutzschicht(en) können eine Folie sein. Eine Schutzschicht kann ferner besonders dünn und mittels Druckverfahren besonders effizient und prozesssicher realisiert werden. Vorzugsweise beträgt die Schichtdicke der Schutzschicht(en) 100 nm bis 800 µm, bevorzugt 1 µm bis 100 µm, besonders bevorzugt 3 µm bis 50 µm. Bevorzugt wird für die Schutzschicht dasselbe Material verwendet wie für die Trägerschicht.

Gemäß dem bereits vor- sowie dem weiter unten nachbeschriebenen wird die eingangs gestellte Aufgabe auch durch einen Riemen mit den Merkmalen des Anspruchs 8 gelöst.

Der erfindungsgemäße Riemen, insbesondere Antriebsriemen oder Fördergurt, enthält ein polymeres Material insbesondere mit darin eingebetteten und sich in Längsrichtung des Riemens erstreckenden Zugträgern. Ferner enthält der Riemen einen erfindungsgemäßen Sensor zur Erkennung von Beschädigungen in dem Riemen. Der Sensor kann in dem Riemen eingebettet oder von außen an diesem befestigt sein. Es können auch Teile oder Schichten des Sensors direkt auf den Riemen appliziert, insbesondere gedruckt, sein.

Vorzugsweise weist das polymere Material elastische Eigenschaften auf und enthält ein Elastomer, ein thermoplastisches Elastomer oder Kombinationen davon.

In einer bevorzugten Ausgestaltung des erfindungsgemäßen Riemens sind die Leiterschleifenanordnungen des Sensor in zumindest einer parallel zur Sensorebene verlaufenden Versatzrichtung zueinander versetzt angeordnet, wobei die Versatzrichtung orthogonal zur Längsrichtung bzw. zur Laufrichtung des Riemens verläuft. Auf diese Weise kann die Qualität des Antwortsignals unter Erhalt des Bauraums in Längs- bzw. Laufrichtung des Riemens erhöht werden.

Gemäß dem bereits vor- sowie dem weiter unten nachbeschriebenen wird die eingangs gestellte Aufgabe auch durch ein System zur Überwachung von Riemen auf das Vorhandensein von Beschädigungen mit den Merkmalen des Anspruchs 10 gelöst.

Das erfindungsgemäße System zur Überwachung von Riemen auf das Vorhandensein von Beschädigungen, insbesondere Rissen, enthält
- einen erfindungsgemäßen Riemen,
- einen Sender, der auf den in oder an dem Riemen angeordneten Sensor gerichtet werden kann und der dazu konfiguriert ist, ein elektrisches und/oder magnetisches Feld auf den Sensor abzustrahlen und in dem Sensor ein induziertes elektrisches und/oder magnetisches Feld zu erzeugen,
- einen Empfänger, der auf den Sensor gerichtet werden kann und der dazu konfiguriert ist, ein in dem Sensor induziertes elektrisches und/oder magnetisches Feld zu empfangen, und
- eine Auswerteeinrichtung, die so konfiguriert ist, dass sie das Vorhandensein einer Beschädigung auf der Grundlage des empfangenen induzierten elektrischen und/oder magnetischen Feldes erkennt.

Vorzugsweise ist die Auswerteeinrichtung dazu konfiguriert, dass sie als Reaktion auf die Erkennung einer Beschädigung auf der Grundlage des empfangenen induzierten elektrischen und/oder magnetischen Feldes ein Stopp-Signal erzeugt, das an eine Steuereinheit des Antriebs des Riemens gesendet werden kann und das die Steuereinheit dazu veranlasst, den Antrieb zu stoppen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1a: eine erste Ausführungsform eines erfindungsgemäßen Sensors aus einer Blickrichtung parallel zur Sensorebene;
- Fig. 1b: den Sensor aus Fig. 1a in einer Detailansicht mit Blick auf die Sensorebene;
- Fig. 2a: eine zweite Ausführungsform eines erfindungsgemäßen Sensors aus einer Blickrichtung parallel zur Sensorebene;
- Fig. 2b: den Sensor aus Fig. 2a in einer Detailansicht mit Blick auf die Sensorebene;
- Fig. 3: eine Ausführungsform eines erfindungsgemäßen Riemens mit dem Sensor gemäß der zweiten Ausführungsform.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

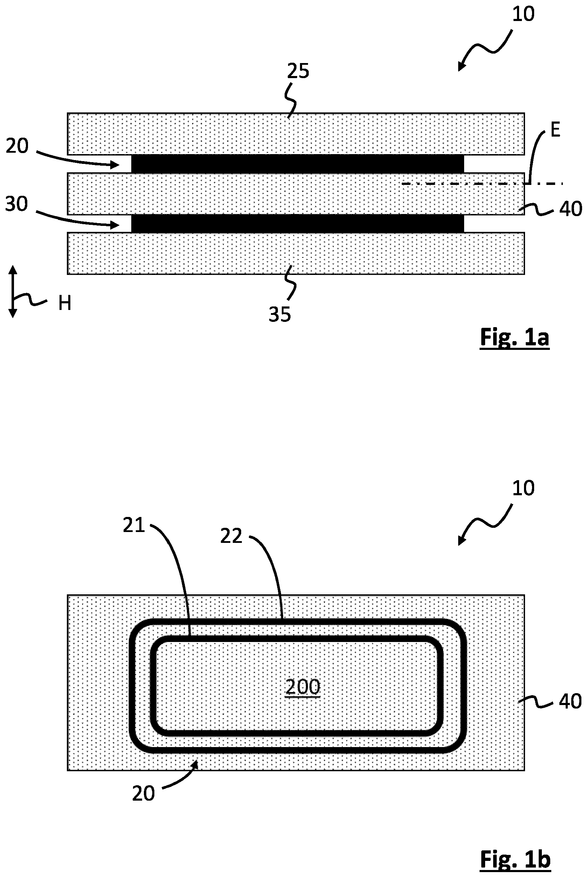

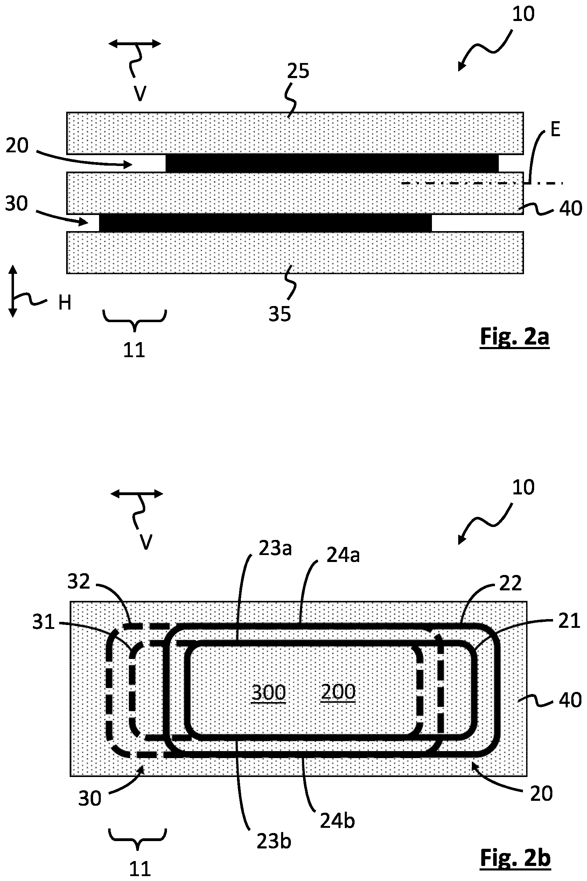

Die Figuren 1a und 1b zeigen eine erste Ausführungsform und die Figuren 2a und 2b eine zweite Ausführungsform eines erfindungsgemäßen Sensors 10 zur Erkennung von Beschädigungen, insbesondere von Rissen, in einem Riemen 1, enthaltend eine erste und eine zweite Leiterschleifenanordnung 20, 30, die sich jeweils parallel zu einer Sensorebene E erstrecken, wobei die erste und die zweite Leiterschleifenanordnung 20, 30 jeweils zumindest eine geschlossene Leiterschleife 21, 22, 31, 32 aufweisen, wobei die zweite Leiterschleifenanordnung 30 von der ersten Leiterschleifenanordnung 20 in einer orthogonal zur Sensorebene E verlaufenden Höhenrichtung H beabstandet ist.

Durch das Stapeln der Leiterschleifenanordnungen 20, 30 übereinander können mehrere Leiterschleifen 21, 22, 31, 32 innerhalb eines bestimmten Flächenabschnitts platziert werden, was das von einem Empfänger detektierbare Antwortsignal verbessert, ohne den Verbrauch an Bauraum wesentlich zu erhöhen.

In den hier gezeigten Ausführungsbeispielen sind die Leiterschleifenanordnungen 20, 30 im Wesentlichen baugleich, d.h. sie weisen die gleiche Höhe, Breite und Länge auf. Dies erleichtert die Herstellung.

Die erste und die zweite Leiterschleifenanordnung 20, 30 weisen jeweils eine geschlossene innere Leiterschleife 21, 31 und eine diese umgebende, geschlossene äußere Leiterschleife 22, 32 auf. Grundsätzlich ist die Anzahl der Leiterschleifen nicht begrenzt, solange sie konzentrisch angeordnet sind und ihre Dimensionen, z.B. Leiterbahnbreite und -höhe, eine konzentrische, nicht überlappende Anordnung erlauben. Daher können bei den Leiterschleifenanordnungen 20, 30 die äußeren Leiterschleifen 22, 32 von weiteren Leiterschleifen umgeben sein und/oder die inneren Leiterschleifen 21, 31 weitere Leiterschleifen umgeben. Zwischen der ersten und der zweiten Leiterschleifenanordnung 20, 30 ist eine dielektrische Trägerschicht 40 angeordnet. Die Sensorebene E kann in einigen Ausführungsformen durch die Trägerschicht 40 definiert werden. Die erste und die zweite Leiterschleifenanordnung 20, 30 sind jeweils auf ihrer der Trägerschicht 40 abgewandten Seite durch eine Schutzschicht 25, 35 zum Schutz vor äußeren Einflüssen geschützt. Zwischen der Trägerschicht 40 und den Schutzschichten 25, 35 kann eine Haftförderschicht liegen (nicht gezeigt), um die Haftung zwischen den äußeren Schutzschichten 25, 35 und der inneren Trägerschicht 40 zu fördern.

Fig. 1b ist eine Draufsicht auf den Sensor aus Fig. 1a ohne dargestellte Schutzschicht 25. Wie in Fig. 1b erkennbar, sind in der ersten Ausführungsform des Sensors 10 die Leiterschleifenanordnungen 20, 30 aus einer Perspektive orthogonal zur Sensorebene kongruent, d.h. ohne Versatz, zueinander angeordnet. Die zweite Leiterschleifenanordnung 30 befindet sich in dieser Ansicht hinter der Trägerschicht 40 und ist nicht dargestellt. Die von den Leiterschleifenanordnungen 20, 30 eingeschlossenen Flächen 200 überdecken sich vollständig.

Fig. 2b ist eine Draufsicht auf den Sensor aus Fig. 2a ohne dargestellte Schutzschicht 25. Wie in Fig. 2b erkennbar, sind in der zweiten Ausführungsform des Sensors 10 die Leiterschleifenanordnungen 20, 30 in einer parallel zur Sensorebene E verlaufenden Versatzrichtung V zueinander versetzt angeordnet. Die zweite Leiterschleifenanordnung 30 befindet sich in dieser Ansicht hinter der Trägerschicht 40 und ihre innere Leiterschleife 31 sowie die äußere Leiterschleife 32 sind gestrichelt dargestellt. Ein derartiger Versatz 11 führt noch einmal zu einer signifikanten Verbesserung des Antwortsignals. Der Versatz 11 ist in einfacher Weise herstellbar und hat nur einen geringen Einfluss auf die Gesamtgröße des Sensors 10. Aus diesem Grund kann der Sensor 10 mit bestehenden Überwachungssystemen kombiniert und kostengünstig nachgerüstet werden, insbesondere weil ein Sender und/oder Empfänger, der mit dem Sensor 10 zusammenwirken soll, nicht größer dimensioniert werden muss.

Die von den Leiterschleifenanordnungen 20, 30 eingeschlossenen Flächen 200, 300 überdecken sich aus einer Perspektive orthogonal zur Sensorebene E zu mehr als 70 %. Ferner weisen die Leiterschleifenanordnungen 20, 30 paarweise parallel zueinander verlaufende Leiterabschnitte 23a, 23b, 24a 24b auf, die sich parallel zur Versatzrichtung V erstrecken (nur für die erste Leiterschleifenanordnung 20 dargestellt).

Eine Herstellung eines erfindungsgemäßen Sensors 10 gemäß erster oder zweiter Ausführungsform kann beispielsweise folgendermaßen erfolgen: Die erste Leiterschleifenanordnung 20 wird auf die erste Schutzschicht 25 aufgedruckt, während die zweite Leiterschleifenanordnung 30 auf die zweite Schutzschicht 35 aufgedruckt wird. Erste und zweite Schutzschicht 25, 35 dienen somit als Substrat für die jeweilige Leiterschleifenanordnung 20, 30. Beispielsweise können die Schutzschichten 25, 35 hierbei als Folie vorliegen. Auf beide Seiten der Trägerschicht 40, die ebenfalls als Folie vorliegen kann, wird ein Klebstoff (nicht dargestellt) appliziert. Die mit den Leiterbahnanordnungen 20, 30 bedruckten Schutzschichten 25, 35 werden jeweils mit der jeweiligen Leiterbahnanordnung 20, 30 voran auf eine der Seiten der Trägerschicht 40 appliziert.

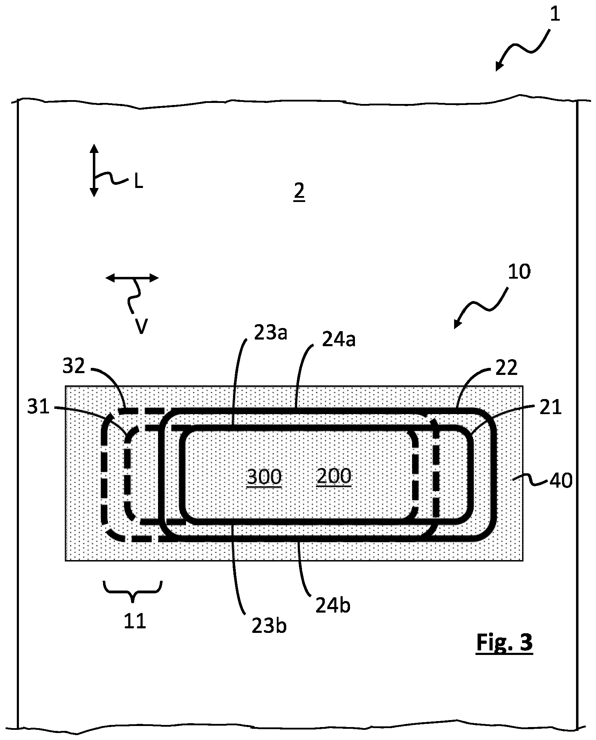

Fig. 3 zeigt einen erfindungsgemäßen Riemen 1, enthaltend ein polymeres Material 2, mit einem daran befestigten, z.B. geklebten, Sensor 10 gemäß der zweiten Ausführungsform. Die Schutzschicht 25 ist aus Gründen der besseren Darstellung nicht dargestellt. Die Versatzrichtung verläuft V orthogonal zur Längs- bzw. Laufrichtung L des Riemens 1.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Sensor (10) zur Erkennung von Beschädigungen, insbesondere von Rissen, in einem Riemen (1), enthaltend eine erste und eine zweite Leiterschleifenanordnung (20, 30), die sich jeweils parallel zu einer Sensorebene (E) erstrecken, wobei die erste und die zweite Leiterschleifenanordnung (20, 30) jeweils zumindest eine geschlossene Leiterschleife (21, 22, 31, 32) aufweisen, wobei die zweite Leiterschleifenanordnung (30) von der ersten Leiterschleifenanordnung (20) in einer orthogonal zur Sensorebene (E) verlaufenden Höhenrichtung (H) beabstandet ist.

2. Sensor (10) nach Anspruch 1, wobei die erste und/oder die zweite Leiterschleifenanordnung (20, 30) eine geschlossene innere Leiterschleife (21, 31) und eine diese umgebende, geschlossene äußere Leiterschleife (22, 32) aufweisen.

3. Sensor (10) nach Anspruch 1 oder 2, wobei zwischen der ersten und der zweiten Leiterschleifenanordnung (20, 30) eine dielektrische Trägerschicht (40) angeordnet ist.

4. Sensor (10) nach einem der vorangehenden Ansprüche, wobei die Leiterschleifenanordnungen (20, 30) in zumindest einer, bevorzugt genau einer, parallel zur Sensorebene (E) verlaufenden Versatzrichtung (V) zueinander versetzt angeordnet sind.

5. Sensor (10) nach Anspruch 4, wobei sich die von den Leiterschleifenanordnungen (20, 30) eingeschlossenen Flächen (200, 300) aus einer Perspektive orthogonal zur Sensorebene (E) zu mehr als 50 %, besonders bevorzugt zu mehr als 70 %, überdecken.

6. Sensor (10) nach einem der Ansprüche 4 oder 5, wobei die Leiterschleifenanordnungen (20, 30) paarweise parallel zueinander verlaufende Leiterabschnitte (23a, 23b, 24a 24b) aufweisen, die sich parallel zur Versatzrichtung (V) erstrecken.

7. Sensor (10) nach einem der vorangehenden Ansprüche, wobei die erste und/oder die zweite Leiterschleifenanordnung (20, 30) durch eine Schutzschicht (25, 35) zum Schutz vor äußeren Einflüssen geschützt ist.

8. Riemen (1), insbesondere Antriebsriemen oder Fördergurt, enthaltend:
- ein polymeres Material (2) insbesondere mit darin eingebetteten und sich in Längsrichtung (L) des Riemens (1) erstreckenden Zugträgern und
- einen Sensor (10) zur Erkennung von Beschädigungen in dem Riemen (1) nach einem der vorangehenden Ansprüche.

9. Riemen (1) nach Anspruch 8 mit einem Sensor (10) zur Erkennung von Rissen in dem Riemen (1) zumindest nach Anspruch 4, wobei die Versatzrichtung (V) orthogonal zur Längsrichtung (L) des Riemens (1) verläuft.

10. System zur Überwachung von Riemen (1) auf das Vorhandensein von Beschädigungen, insbesondere Rissen, enthaltend:
- einen Riemen (1) nach einem der Ansprüche 8 oder 9,
- einen Sender, der auf den Sensor (10) gerichtet werden kann und der dazu konfiguriert ist, ein elektrisches und/oder magnetisches Feld auf den Sensor (10) abzustrahlen und in dem Sensor (10) ein induziertes elektrisches und/oder magnetisches Feld zu erzeugen,
- einen Empfänger, der auf den Sensor (10) gerichtet werden kann und der dazu konfiguriert ist, ein in dem Sensor (10) induziertes elektrisches und/oder magnetisches Feld zu empfangen,
- eine Auswerteeinrichtung, die so konfiguriert ist, dass sie das Vorhandensein einer Beschädigung auf der Grundlage des empfangenen induzierten elektrischen und/oder magnetischen Feldes erkennt.
